# EUROPÄISCHE PATENTSCHRIFT

(11) **EP 2 764 216 B1**
(45) Veröffentlichungstag und Bekanntmachung des Hinweises auf die Patenterteilung: **13.04.2016**
(21) Anmeldenummer: 12759670.8
(22) Anmeldetag: 07.09.2012
(51) Int. Cl.: F01K 7/16, F01K 23/02, F01K 13/00

(54) **HOCHTEMPERATUR-ENERGIESPEICHER MIT REKUPERATOR**
HIGH-TEMPERATURE ENERGY STORE HAVING A RECUPERATOR
ACCUMULATEUR D'ÉNERGIE HAUTE TEMPÉRATURE POURVU D'UN RÉCUPÉRATEUR

(30) Priorität: 15.11.2011 DE 102011086374
(43) Veröffentlichungstag der Anmeldung: 13.08.2014
(73) Patentinhaber: Siemens Aktiengesellschaft, 80333 München (DE)
(72) Erfinder: GRAEBER, Carsten, 91056 Erlangen (DE); BRUNHUBER, Christian, 91275 Auerbach (DE); ZIMMERMANN, Gerhard, 91315 Höchstadt/Aisch (DE)
(86) Internationale Anmeldenummer: PCT/EP2012/067493
(87) Internationale Veröffentlichungsnummer: WO 2013/072085

(56) Entgegenhaltungen:
- WO-A1-2007/137373
- WO-A2-2010/081883
- DE-A1-102008 039 449
- JP-A- 2000 297 657
- US-A1- 2009 120 092

## Beschreibung

Die Erfindung betrifft einen effizienten Hochtemperatur-Energiespeicher, bei dem mittels Rekuperation der Kompressorabwärme im Luft-Ladezyklus thermische Energie speicherbar ist.

Die Notwendigkeit zur Speicherung von Energie ergibt sich insbesondere aus dem stetig anwachsenden Anteil an Kraftwerksanlagen aus dem Sektor der erneuerbaren Energien. Ziel der Energiespeicherung ist es dabei, die Kraftwerke mit erneuerbaren Energien derart in den Stromübertragungsnetzen nutzbar zu machen, dass auf erneuerbar erzeugte Energie auch zeitversetzt zugegriffen werden kann, um so fossile Energieträger und somit CO₂ Emissionen einzusparen.

Aufgrund der Zeitspanne die ein Energiespeicher zu überbrücken hat, also der Zeit, über die Energie in bzw. aus dem Energiespeicher ein- und ausgespeichert wird, und der Leistung die es zu speichern gilt, sind an die Dimensionen thermische Energiespeicher entsprechend hohe Anforderungen gestellt. Schon allein aufgrund der Baugröße können thermische Energiespeicher daher sehr teuer in der Anschaffung werden. Ist der Energiespeicher dazu aufwendig gestaltet, oder das eigentliche Wärmespeichermedium teuer in der Anschaffung oder aufwendig im Betrieb, können die Anschaffungs- und Betriebskosten für einen thermischen Energiespeicher schnell die Wirtschaftlichkeit der Energiespeicherung in Frage stellen.

Damit sich die Herstellkosten für den Energiespeicher rechnen, wird kostengünstiges Speichermaterial bevorzugt. Auch der Wärmetauscher sollte möglichst kostengünstig dimensioniert werden. Aufgrund der oft geringen Wärmeleitfähigkeit der kostengünstigen Speichermaterialien sind jedoch oft die Wärmetauscherflächen sehr groß auszulegen. Die große Anzahl und Länge der Wärmetauscherrohre lassen dabei die Kosten des Wärmetauschers stark ansteigen, welche selbst durch ein kostengünstiges Speichermaterial nicht mehr kompensiert werden können.

Bisher wurden Wärmetauscher auf Basis kostengünstiger Materialien hauptsächlich in Form eines direkten Austauschs des Wärmeträgers und des Speichermaterials, wie beispielsweise Sand oder Gestein, ausgestaltet, um große Wärmetauscher zu ersetzen. Als Wärmeträgermedium kommt ein Arbeitsgas, wie beispielsweise Luft, zum Einsatz. Das Arbeitsgas kann dabei wahlweise in einem geschlossenen oder einem offenen Ladekreislauf oder Zusatzkreislauf geführt werden.

Die in der Technik prinzipiell bekannte Wirbelschichttechnik wurde bisher nicht in einer Größenordnung angewandt, die für eine saisonale Speicherung von erneuerbaren Überschussenergien erforderlich wäre. Ein direkter Wärmeaustausch bringt zudem einen relativ komplizierten Umgang mit dem Feststoff mit sich, was für einen Großspeicher nicht wirtschaftlich ist.

Hochkapazitative Energiespeicher existieren heute vor allem in der Form von Pumpspeicherkraftwerken und Druckluftspeicherkraftwerken. Durch das beschränkte Ausbaupotential dieser Speicher in vielen Regionen befinden sich viele andere Speichertechnologien in der Entwicklung.

Ein gattungsgemäßer Energiespeicher kann bspw. aus der WO 2007/137373 entnommen werden.

Aufgabe der Erfindung ist es eine kostengünstige Energiespeichervorrichtung zur Speicherung thermischer Energie auf Basis von kostengünstigen Speichermaterialen anzugeben, die einen verbesserten Wirkungsgrad aufweist. Dabei gilt es insbesondere die Nachteile aus dem Stand der Technik zu vermeiden. Aufgabe der Erfindung ist zudem ein Verfahren anzugeben, durch welches sich unter einem verbesserten Wirkungsgrad thermische Energie in kostengünstigen Speichermaterialen speichern lässt.

Gelöst wird die auf eine Vorrichtung gerichtete Aufgabe der Erfindung durch die Merkmale des Anspruchs 1. Der Ladekreislauf zur Umwandlung elektrischer Energie in thermische Energie, umfasst eine Kompressionsstufe, die über eine Welle mit einem Elektromotor verbunden ist, einen Wärmetauscher und einer Expansionsstufe, die über eine Welle mit einem Generator verbunden ist. Die Kompressionsstufe ist mit der Expansionsstufe über eine Heißgasleitung verbunden. Der Wärmetauscher ist primärseitig in die Heißgasleitung geschaltet, und die Expansionsstufe ist über eine Rückführleitung mit der Kompressionsstufe verbunden. Dadurch ist ein geschlossener Kreislauf für ein Arbeitsgas gebildet. Erfindungsgemäß ist nun weiterhin ein Rekuperator vorgesehen, der primärseitig in die Heißgasleitung zwischen dem Wärmetauscher und der Expansionsstufe und sekundärseitig in die Rückführleitung geschaltet ist, sodass Wärme des Arbeitsgases in der Heißgasleitung auf das Arbeitsgas in der Rückführleitung übertragbar ist.

Die Erfindung macht sich nun zu Nutze, dass, obwohl nur noch ein Teil der verfügbaren thermischen Energie gespeichert wird, sich die Gesamtbilanz der Energiespeicherung zugunsten eines erhöhten Wirkungsgrads verschiebt. Dies erklärt sich einerseits dadurch, dass auf eine Vorrichtung zum Anwärmen, Zwischenerhitzen oder Entwässern der Expansionsluft verzichtet werden kann, die sich sonst negativ auf den Wirkungsgrad auswirkt. Durch die Expansion auf in etwa Umgebungsdruck und Umgebungstemperatur ist somit das Problem der Kondensation von Wasser, selbst bei Verwendung von feuchter Ansaugluft für den Verdichter vorteilhaft vermieden. Somit können bei dem erfindungsgemäßen Verfahren keine Schäden durch gefrorenes Kondensat entstehen. Auch auf einen Kondensator kann verzichtet werden.

Die Expansionsturbine verringert zudem den Energieaufwand für die Verdichtung, indem sie auf der gleichen Welle wie der Verdichter angeordnet ist, und den Verdichter wesentlich mit unterstützt.

Da die Abkühlung des Arbeitsgases bei niedrigen Temperaturen sehr große Wärmetauscherflächen erfordert, kann durch den Verzicht auf Verwertung der niedrigeren Temperaturen auch der Wärmespeicher günstiger ausfallen, da der Wärmetauscher kleiner dimensioniert werden kann.

Zudem erzielt der Rekuperator aufgrund der Kompressor-Abwärme im Ladekreislauf (effiziente Kompression auf hohe Temperaturniveaus) eine Wärmepumpeneffizienz deutlich > 100%.

Die Rekuperation der Kompressor-Abwärme wird dadurch möglich, dass im Thermospeicher lediglich Hochtemperaturwärme, z.B. >350°C benutzt wird. Wärme auf geringerem Temperaturniveau wird zur Vorwärmung am Kompressoreintritt verwendet, wodurch sich der elektrische Energiebedarf der quasi-adiabaten Kompression verringert und hohe Wärmepumpeneffizienzen ermöglicht.

Der erfinderische Schritt liegt in der Realisierung des Ladezyklus und des Thermospeichers. Aufgrund der Verwendung eines Hochtemperaturspeichers mit z.B. T>350°C kann die Niedertemperaturabwärme aus der Luft-Kompression zur Vorheizung der Kompressor-Luft verwendet werden (Rekuperation). Auf diese Weise ergibt sich ein Ladezyklus mit einer hohen Wärmepumpeneffizienz.

Dadurch, dass das Arbeitsgas beim Verlassen der Expansionsstufe nicht stark unterkühlt ist, sondern nur Temperaturen von knapp unter 0°C aufweist, können übliche Verdichter als Expansionsstufe eingesetzt werden. Bei sehr niedrigen Austrittstemperaturen sind sonst speziell konfigurierte Verdichter erforderlich.

In dem Kreislauf kann ein Inertgas verwendet werden. Die Temperatur T3 und der Druck P3 werden dabei vorzugsweise durch die Dimensionierung des Wärmetauscherprozesses, und dabei insbesondere durch die Größe der Wärmetauscherfläche, eingestellt. Da das Arbeitsgas nur noch einen Teil seiner Wärmeenergie über den Wärmetauscher an den Wärmespeicher abgeben muss, lässt sich die Größe der Wärmetauscherfläche wesentlich verringern. Dadurch kann erheblich an Kosten für die Anschaffung des Wärmespeichers gespart werden.

Der Wärmeaustausch bei der Rekuperation kann entweder direkt in einem Luft-Luft-Wärmetauscher oder durch einen Zwischenkreislauf mit einem effizienten Wärmeträgermedium (z.B. Thermoöl) erfolgen. Bei der Beschreibung des Wärmeübergangs wird im Rahmen der Erfindung die Primärseite als die Wärme abgebende Seite, und die Sekundärseite als die Wärme aufnehmende Seite definiert.

Beim Thermospeicher wird aufgrund des höheren Effizienz-Potentials ein direkter Temperaturaustausch mit der Heißluft (beim Laden) und dem Wasser (beim Entladen) mit dem Speichermaterial bevorzugt (direkte Beaufschlagung Thermospeicher ohne separaten Luftkreislauf, siehe Darstellungen).

Der Ladekreislauf kann Bestandteil einer Heizung sein, wobei die Heizung sekundärseitig in den Wärmetauscher geschaltet ist, sodass Wärme über den Wärmetauscher durch die Heizung an ein zu beheizendes Medium übertragbar ist.

Vorteilhafterweise ist in die Rückführleitung ein Umgebungsluftwärmetauscher geschaltet, durch den das in der Rückführleitung geführte Arbeitsgas auf Außentemperatur erwärmbar ist. Aufgrund der Rekuperation der Kompressor-Abwärme im Ladekreislauf (effiziente Kompression auf hohe Temperaturniveaus) und der Aufwärmung der Expansionsluft (Einbringung von Umgebungswärme) erzielt man eine Wärmepumpeneffizienz deutlich > 100% und ist somit Konzepten mit elektrischer Heizung deutlich überlegen.

Bei einer vorteilhaften Ausgestaltung ist der Ladekreislauf Bestandteil einer Energiespeichervorrichtung, die weiterhin einen Wärmespeicher und einen Entladekreislauf aufweist, wobei die Sekundärseite des Wärmetauschers über eine Gasleitung mit der Primärseite des Wärmespeicher verbunden ist, sodass Wärme des Arbeitsgases aus dem Kreislauf über den Wärmetauscher (5) indirekt in den Wärmespeicher übertragbar ist. Alternativ dazu kann der Ladekreislauf Bestandteil einer Energiespeichervorrichtung sein, die weiterhin einen Wärmespeicher und einen Entladekreislauf aufweist, wobei der Wärmetauscher ein Wärmespeicher ist, sodass das Arbeitsgas aus dem Kreislauf den Wärmespeicher durchströmt, und dadurch die Wärme aus dem Arbeitsgas direkt auf den Wärmespeicher übertragbar ist.

Der Entladekreislauf umfasst einen Dampferzeuger, eine Dampfturbine, einen Generator und einen Kondensator, wobei die Dampfturbine über eine Welle mit dem Generator verbunden ist, und der Dampferzeuger, die Dampfturbine und der Kondensator in einen Wasser-Dampf-Kreislauf geschalten sind, wobei die Primärseite des Dampferzeugers über eine Dampfleitung mit der Sekundärseite des Wärmespeichers verbunden ist. Alternativ dazu kann der Entladekreislauf einen Dampferzeuger, eine Dampfturbine, einen Generator und einen Kondensator umfassen, wobei die Dampfturbine über eine Welle mit dem Generator verbunden ist, und der Dampferzeuger, die Dampfturbine und der Kondensator in einen Wasser-Dampf-Kreislauf geschalten sind. Dabei ist der Dampferzeuger der Wärmespeicher, so dass durch Einbringen von Wasser in den Wärmespeicher direkt ein Dampf erzeugbar ist.

Bei einer vorteilhaften Weiterentwicklung ist in die Heißgasleitung vor dem Wärmespeicher eine elektrische Zusatzheizung geschaltet. Durch diese optionale Maßnahme kann eine weitere Steigerung der Effizienz durch eine Anhebung der maximalen Speichertemperatur in Form einer elektrischen Zusatzheizung vor dem Thermospeicher realisiert werden.

Vorteilhafterweise sind die Kompressionsstufe mit der Expansionsstufe über eine Welle miteinander verbunden.

Bei einer vorteilhaften Weiterentwicklung besteht die Kompressionsstufe aus mehreren Verdichterstufen, wobei jeder Verdichterstufe jeweils ein Wärmetauscher nachgeschal-tet ist. So ist wenigstens einer ersten Verdichterstufe ein erster Wärmetauscher nachgeschaltet und einer zweiten Verdichterstufe ein zweiter Wärmetauscher. Zudem kann die Expansionsstufe aus mehreren Expansionsstufen bestehen, wobei jeder Expansionsstufe ein Umgebungsluftwärmetauscher nachgeschaltet ist, sodass wenigstens einer ersten Expanderstufe ein erster Umgebungsluftwärmetauscher nachgeschaltet ist, und einer zweiten Expanderstufe ein zweiter Umgebungsluftwärmetauscher nachgeschaltet ist. Die genaue Anzahl der Kompressor- und Expanderstufen (in der Anlage ist ein Beispiel mit zwei Kompressor- und zwei Expanderstufen gezeigt) ist frei wählbar und muss nach technoökonomischen Gesichtspunkten optimiert werden.

Vorzugsweise wird die im Expansionsprozess freiwerdende Expansionsenergie auf den Verdichterprozess übertragen. Somit leistet die Energie, die nicht in Form von Wärme auf den Wärmespeicher übertragen wurde, noch einen merklichen Beitrag zur Verdichtung des Arbeitsgases.

Die thermische Energie kann die saisonal anfallende Überschussenergie eines Kraftwerks mit erneuerbaren Energien sein. Als Speichermaterial für den Wärmespeicher des Wärmetauscherprozesses eignen sich besonders poröse Materialien, Sand, Kies, Gestein, Beton, Wasser oder Salzlösung.

Die Erfindung löst das Problem einer effizienten Energiespeicherung für Überschuss-Strom in Form von Wärme. Die hohe Effizienz beruht auf einer hohen Wärmepumpeneffizienz von deutlich > 100% und ist somit Konzepten mit elektrischer Heizung deutlich überlegen.

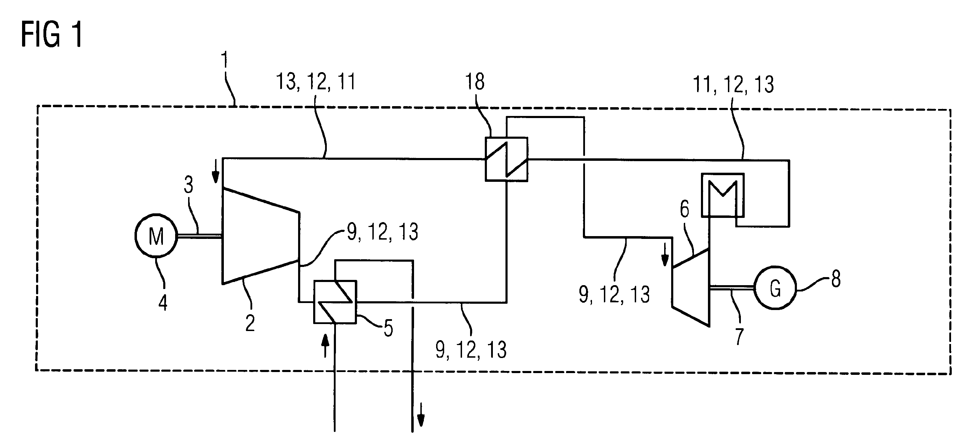

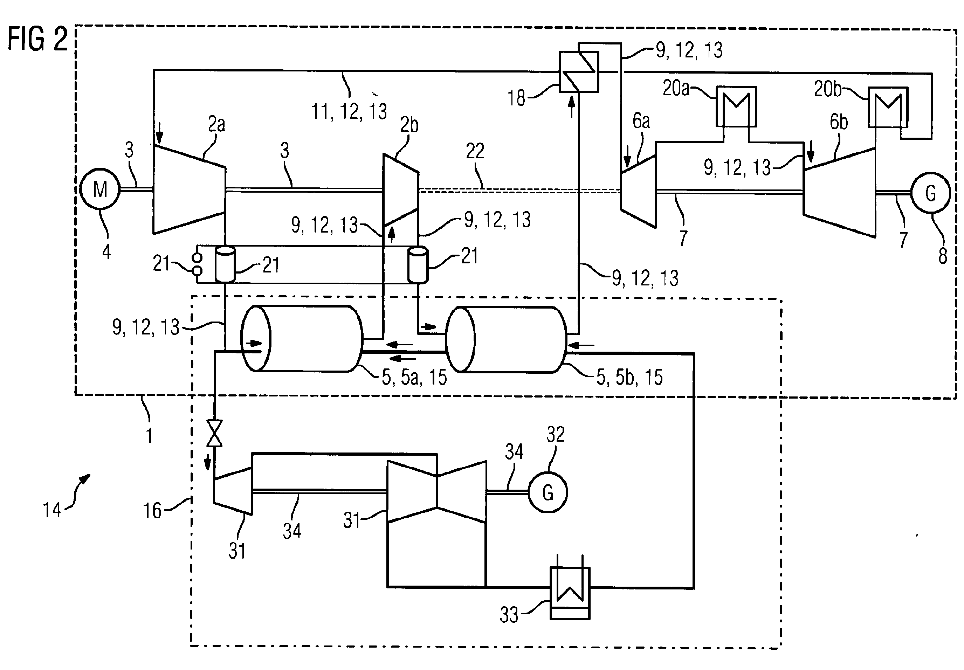

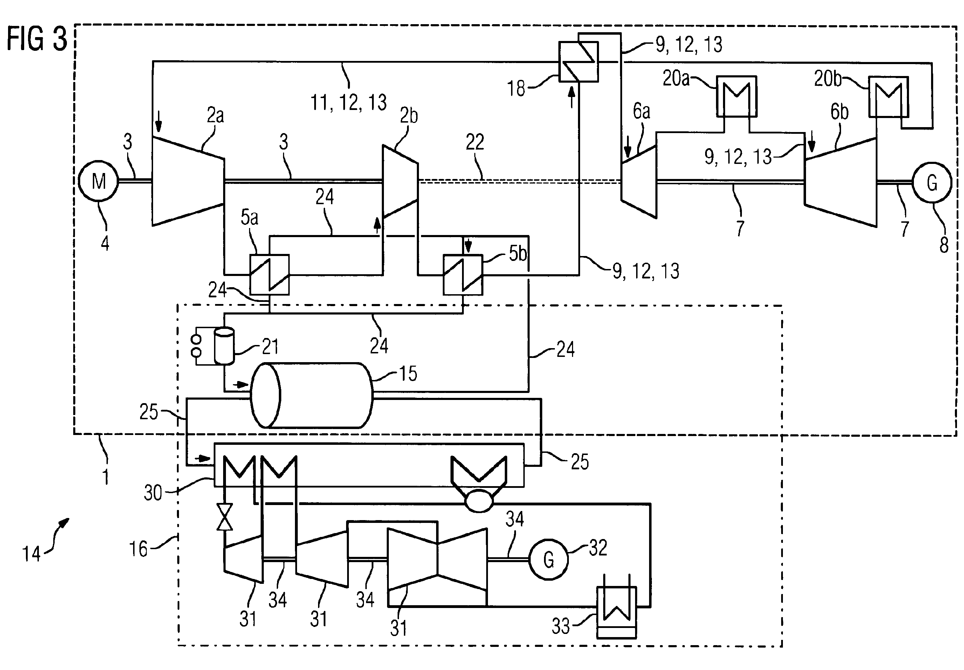

## Patentansprüche

1. Ladekreislauf (1) zur Umwandlung elektrischer Energie in thermische Energie, mit einer Kompressionsstufe (2), die über eine Welle (3) mit einem Elektromotor (4) verbunden ist, einem Wärmetauscher (5) und einer Expansionsstufe (6), die über eine Welle (7) mit einem Generator (8) verbunden ist, wobei die Kompressionsstufe (2) mit der Expansionsstufe (6) über eine Heißgasleitung (9) verbunden ist, und der Wärmetauscher (5) primärseitig in die Heißgasleitung (9) geschaltet ist, und wobei die Expansionsstufe (6) über eine Rückführleitung (11) mit der Kompressionsstufe (2) verbunden ist, sodass ein geschlossener Kreislauf (12) für ein Arbeitsgas (13) gebildet ist,
**dadurch gekennzeichnet, dass**
weiterhin ein Rekuperator (18) vorgesehen ist, der primärseitig in die Heißgasleitung (9) zwischen dem Wärmetauscher (5) und der Expansionsstufe (6) und sekundärseitig in die Rückführleitung (11) geschaltet ist, sodass Wärme des Arbeitsgases (13) in der Heißgasleitung (9) auf das Arbeitsgas (13) in der Rückführleitung (11) übertragbar ist.

2. Ladekreislauf (1) nach Anspruch 1,
**dadurch gekennzeichnet, dass**
der Ladekreislauf (1) Bestandteil einer Heizung ist, wobei die Heizung sekundärseitig in den Wärmetauscher (5) geschaltet ist, sodass Wärme über den Wärmetauscher (5) durch die Heizung an ein zu beheizendes Medium übertragbar ist.

3. Ladekreislauf (1) nach Anspruch 1,
**dadurch gekennzeichnet, dass**
in die Rückführleitung (11) ein Umgebungsluftwärmetauscher (20a, 20b) geschaltet ist, durch den das in der Rückführleitung (11) geführte Arbeitsgas (13) auf Außentemperatur erwärmbar ist.

4. Ladekreislauf (1) nach Anspruch 1,
**dadurch gekennzeichnet, dass**
der Ladekreislauf (1) Bestandteil einer Energiespeichervorrichtung (14) ist, die weiterhin einen Wärmespeicher (15) und einen Entladekreislauf (16) aufweist, wobei die Sekundärseite des Wärmetauschers (5) über eine Gasleitung (24) mit der Primärseite des Wärmespeichers (15) verbunden ist, sodass Wärme des Arbeitsgases (13) aus dem Kreislauf (12) über den Wärmetauscher (5) indirekt in den Wärmespeicher (15) übertragbar ist.

5. Ladekreislauf (1) nach Anspruch 1,
**dadurch gekennzeichnet, dass**
der Ladekreislauf (1) Bestandteil einer Energiespeichervorrichtung (14) ist, die weiterhin einen Wärmespeicher (15) und einen Entladekreislauf (16) aufweist, wobei der Wärmetauscher (5) ein Wärmespeicher (15) ist, sodass das Arbeitsgas (13) aus dem Kreislauf (12) den Wärmespeicher (15) durchströmt, und dadurch die Wärme aus dem Arbeitsgas (13) direkt auf den Wärmespeicher (15) übertragbar ist.

6. Ladekreislauf nach einem der Ansprüche 4 oder 5,
**dadurch gekennzeichnet, dass**
der Entladekreislauf (16) einen Dampferzeuger (30), eine Dampfturbine (31), einen Generator (32) und einen Kondensator (33) umfasst, wobei die Dampfturbine (31) über eine Welle (34) mit dem Generator (32) verbunden ist, und
der Dampferzeuger (30), die Dampfturbine (31) und der Kondensator (33) in einen Wasser-Dampf-Kreislauf (35) geschalten sind, wobei die Primärseite des Dampferzeugers (30) über eine Dampfleitung (25) mit der Sekundärseite des Wärmespeichers (15) verbunden ist.

7. Ladekreislauf nach einem der Ansprüche 4 oder 5,
**dadurch gekennzeichnet, dass**
der Entladekreislauf (16) einen Dampferzeuger (30), eine Dampfturbine (31), einen Generator (32) und einen Kondensator (33) umfasst, wobei die Dampfturbine (31) über eine Welle (34) mit dem Generator (32) verbunden ist, und der Dampferzeuger (30), die Dampfturbine (31) und der Kondensator (33) in einen Wasser-Dampf-Kreislauf (35) geschalten sind, wobei der Dampferzeuger (30) der Wärmespeicher (15) ist, sodass durch Einbringen von Wasser in den Wärmespeicher (15) direkt ein Dampf erzeugbar ist.

8. Ladekreislauf nach einem der Ansprüche 1 bis 7,
**dadurch gekennzeichnet, dass**
in die Heißgasleitung (9) vor dem Wärmespeicher (15) eine elektrische Zusatzheizung (21) geschaltet ist.

9. Ladekreislauf nach einem der Ansprüche 1 bis 8,
**dadurch gekennzeichnet, dass**
die Kompressionsstufe (2) mit der Expansionsstufe (6) über eine Welle (22) miteinander verbunden ist.

10. Ladekreislauf (1) nach einem der Ansprüche 1 bis 9,
**dadurch gekennzeichnet, dass**
die Kompressionsstufe (2) aus mehreren Verdichterstufen besteht, und jeder Verdichterstufe jeweils ein Wärmetauscher (5) nachgeschaltet ist, sodass wenigstens einer ersten Verdichterstufe (2a) ein erster Wärmetauscher (5a) nachgeschaltet ist und einer zweiten Verdichterstufe (2b) ein zweiter Wärmetauscher (5b) nachgeschaltet ist.

11. Ladekreislauf (1) nach einem der Ansprüche 1 bis 10,
**dadurch gekennzeichnet, dass**
die Expansionsstufe (6) aus mehreren Expansionsstufen besteht, und jeder Expansionsstufe ein Umgebungsluftwärmetauscher (20a, 20b) nachgeschaltet ist, sodass wenigstens einer ersten Expanderstufe (6a) ein erster Umgebungsluftwärmetauscher (20a) nachgeschaltet ist, und einer zweiten Expanderstufe (6b) ein zweiter Umgebungsluftwärmetauscher (20b) nachgeschaltet ist.

12. Ladekreislauf (1) nach einem der Ansprüche 2 bis 11,
**gekennzeichnet durch**
die Anwendung in einem Kraftwerk, welches mit erneuerbaren Energien betrieben wird, zur Speicherung von saisonaler elektrischer Überschussenergie.

13. Ladekreislauf (1) nach einem der Ansprüche 2 bis 12,
**dadurch gekennzeichnet, dass**
der Wärmespeicher (15) ein poröses Speichermedium enthält, das Sand, Kies, Gestein, Beton, Wasser oder Salzlösung umfasst.

14. Verfahren zur Erzeugung thermischer Energie, bei dem in einem Ladeprozess
a) in einem Kompressionsprozess ein Arbeitsgas (13) von einer Temperatur T1 und einem Druck P1 auf einen Druck P2 mit einer Temperatur T2 verdichtet wird,
b) in einem Wärmetauscherprozess Wärme aus dem Arbeitsgas (13) auf einen Wärmespeicher (15) übertragen wird, wodurch Temperatur und Druck des Arbeitsgases (13) auf eine Temperatur T3 und einen Druck P3 verringert werden, und
c) in einem Expansionsprozess das Arbeitsgas (13) auf einen Druck P4 mit einer Temperatur T4 entspannt wird, und das entspannte Arbeitsgas (13) wieder dem Kompressionsprozess in einer Rückführleitung zurück geführt werden,
wobei dem Arbeitsgas zwischen dem Wärmetauscherprozess und dem Expansionsprozess Wärme entzogen, und an das Arbeitsgas (13) in der Rückführleitung übertragen wird.

15. Verfahren nach Anspruch 14, bei dem die Temperatur T3 und der Druck P3 durch die Dimensionierung des Wärmetauscherprozesses eingestellt werden.

16. Verfahren nach einem der Ansprüche 14 oder 15, wobei der Kompressionsprozess mit elektrisch saisonal anfallender Überschussenergie eines Kraftwerks mit erneuerbaren Energien angetrieben wird.

17. Verfahren nach einem der Ansprüche 14 bis 16, wobei als Speichermaterial für den Wärmespeicher des Wärmetauscherprozesses poröse Materialien, Sand, Kies, Gestein, Beton, Wasser oder Salzlösung verwendet werden.

## Claims

1. Charging circuit (1) for converting electric energy into thermal energy, having a compression stage (2), which is connected via a shaft (3) to an electric motor (4), a heat exchanger (5) and an expansion stage (6), which is connected via a shaft (7) to a generator (8), wherein the compression stage (2) is connected to the expansion stage (6) via a hot gas line (9), and the heat exchanger (5) is connected on the primary side into the hot gas line (9), and wherein the expansion stage (6) is connected to the compression stage (2) via a return line (11) so that a closed circuit (12) for a working gas (13) is formed, **characterized in that** provision is also made for a recuperator (18) which is connected on the primary side into the hot gas line (9) between the heat exchanger (5) and the expansion stage (6) and connected on the secondary side into the return line (11) so that heat of the working gas (13) in the hot gas line (9) can be transferred to the working gas (13) in the return line (11).

2. Charging circuit (1) according to Claim 1, **characterized in that** the charging circuit (1) is a component part of a heater, wherein the heater is connected on the secondary side into the heat exchanger (5) so that heat can be transferred by means of the heater, via the heat exchanger (5), to a medium which is to be heated.

3. Charging circuit (1) according to Claim 1, **characterized in that** an ambient air heat exchanger (20a, 20b) is connected into the return line (11), by means of which the working gas (13) which is conducted in the return line (11) can be heated to outside temperature.

4. Charging circuit (1) according to Claim 1, **characterized in that** the charging circuit (1) is a component part of an energy storage device (14) which furthermore has a thermal store (15) and a discharging circuit (16), wherein the secondary side of the heat exchanger (5) is connected to the primary side of the thermal store (15) via a gas line (24) so that heat of the working gas (13) can be transferred from the circuit (12) via the heat exchanger (5) indirectly into the thermal store (15).

5. Charging circuit (1) according to Claim 1, **characterized in that** the charging circuit (1) is a component part of an energy storage device (14) which furthermore has a thermal store (15) and a discharging circuit (16), wherein the heat exchanger (5) is a thermal store (15) so that the working gas (13) flows from the circuit (12) through the thermal store (15), and consequently the heat from the working gas (13) can be transferred directly to the thermal store (15).

6. Charging circuit according to either of Claims 4 and 5, **characterized in that** the discharging circuit (16) comprises a steam generator (30), a steam turbine (31), a generator (32) and a condenser (33), wherein the steam turbine (31) is connected via shaft (34) to the generator (32), and the steam generator (30), the steam turbine (31) and the condenser (33) are connected into a water-steam cycle (35), wherein the primary side of the steam generator (30) is connected via a steam line (25) to the secondary side of the thermal store (15).

7. Charging circuit according to either of Claims 4 and 5, **characterized in that** the discharging circuit (16) comprises a steam generator (30), a steam turbine (31), a generator (32) and a condenser (33), wherein the steam turbine (31) is connected via a shaft (34) to the generator (32), and the steam generator (30), the steam turbine (31) and the condenser (33) are connected into a water-steam cycle (35), wherein the steam generator (30) is the thermal store (15) so that by introducing water steam can be generated directly in the thermal store (15).

8. Charging circuit according to one of Claims 1 to 7, **characterized in that** an electric auxiliary heater (21) is connected into the hot gas line (9) upstream of the thermal store (15).

9. Charging circuit according to one of Claims 1 to 8, **characterized in that** the compression stage (2) and the expansion stage (6) are interconnected via a shaft (22).

10. Charging circuit (1) according to one of Claims 1 to 9, **characterized in that** the compression stage (2) comprises a plurality of compressor stages and a heat exchanger (5) is connected downstream to each compressor stage in each case so that a first heat exchanger (5a) is connected downstream to at least a first compressor stage (2a) and a second heat exchanger (5b) is connected downstream to a second compressor stage (2b).

11. Charging circuit (1) according to one of Claims 1 to 10, **characterized in that** the expansion stage (6) comprises a plurality of expansion stages and an ambient air heat exchanger (20a, 20b) is connected downstream to each expansion stage so that a first ambient air heat exchanger (20a) is connected downstream to at least a first expander stage (6a) and a second ambient air heat exchanger (20b) is connected downstream to a second expander stage (6b).

12. Charging circuit (1) according to one of Claims 2 to 11, **characterized by** use in a power plant, which is operated with renewable energy, for storing seasonal electric surplus energy.

13. Charging circuit (1) according to one of Claims 2 to 12, **characterized in that** the thermal store (15) contains a porous storage medium which comprises sand, clay, stones, concrete, water or saline solution.

14. Method for generating thermal energy, in which in a charging process,
a) in a compression process, a working gas (13) is compressed from a temperature T1 and a pressure P1 to a pressure P2 with a temperature T2,
b) in a heat exchange process, heat is transferred from the working gas (13) to a thermal store (15), as a result of which temperature and pressure of the working gas (13) are reduced to a temperature T3 and a pressure P3, and
c) in an expansion process, the working gas (13) is expanded to a pressure P4 with a temperature T4, and the expanded working gas (13) is fed back again in a return line to the compression process,
wherein heat is extracted from the working gas between the heat exchange process () and the expansion process () and is transferred to the working gas () in the return line.

15. Method according to Claim 14, in which the temperature T3 and the pressure P3 are set by the dimensioning of the heat exchange process (21).

16. Method according to either of Claims 14 and 15, wherein the compression process is driven by electrically seasonally arising surplus energy of a power plant with renewable energies.

17. Method according to one of Claims 14 to 16, wherein as storage material for the thermal store of the heat exchange process porous materials, sand, clay, stones, concrete, water or saline solution are used.

## Revendications

1. Circuit ( 1 ) de charge pour transformer de l'énergie électrique en énergie thermique, comprenant un étage ( 2 ) de compression qui est relié à un moteur ( 4 ) électrique par un arbre ( 3 ), un échangeur de chaleur ( 5 ) et un étage ( 6 ) de détente qui est relié à une génératrice ( 8 ) par un arbre ( 7 ), l'étage ( 2 ) de compression communiquant avec l'étage ( 6 ) de détente par un conduit ( 9 ) pour du gaz chaud et l'échangeur de chaleur ( 5 ) étant monté du côté primaire dans le conduit ( 9 ) pour du gaz chaud et dans lequel l'étage ( 6 ) de détente communique avec l'étage ( 2 ) de compression par un conduit ( 11 ) de retour de manière à former un circuit ( 12 ) fermé pour un gaz ( 13 ) de travail,
**caractérisé en ce que**
il est prévu en outre un récupérateur ( 18 ) qui est monté, du côté primaire, dans le conduit ( 9 ) pour du gaz chaud entre l'échangeur de chaleur ( 5 ) et l'étage ( 6 ) de détente et, du côté secondaire, dans le conduit ( 11 ) de retour, de manière à pouvoir transmettre de la chaleur du gaz ( 13 ) de travail dans le conduit ( 9 ) pour le gaz chaud au gaz ( 13 ) de travail dans le conduit ( 11 ) de retour.

2. Circuit ( 1 ) de charge suivant la revendication 1,
**caractérisé en ce que**
le circuit ( 1 ) de charge fait partie d'un chauffage, le chauffage étant monté du côté secondaire dans l'échangeur de chaleur ( 5 ) de manière à pouvoir transmettre à un fluide à chauffer de la chaleur par le chauffage, par l'intermédiaire de l'échangeur de chaleur ( 5 ).

3. Circuit ( 1 ) de charge suivant la revendication 1,
**caractérisé en ce qu'**
il est monté dans le conduit ( 11 ) de retour un échangeur de chaleur ( 20a, 20b ) pour l'air ambiant, par lequel le gaz ( 13 ) de travail passant dans le conduit ( 11 ) de retour peut être porté à la température extérieure.

4. Circuit ( 1 ) de charge suivant la revendication 1,
**caractérisé en ce que**
le circuit ( 1 ) de charge fait partie d'un dispositif ( 14 ) d'accumulation d'énergie, qui a en outre un accumulateur ( 15 ) de chaleur et un circuit ( 16 ) de décharge, le côté secondaire de l'échangeur de chaleur ( 5 ) communiquant avec le côté primaire de l'accumulateur de chaleur ( 15 ) par un conduit ( 24 ) pour du gaz de manière à pouvoir transmettre de la chaleur ( 13 ) du gaz de travail du circuit ( 12 ) indirectement à l'accumulateur ( 15 ) de chaleur par l'intermédiaire de l'échangeur de chaleur ( 5 ).

5. Circuit ( 1 ) de charge suivant la revendication 1,
**caractérisé en ce que**
le circuit ( 1 ) de charge fait partie d'un dispositif ( 14 ) d'accumulation d'énergie, qui a en outre un accumulateur ( 15 ) de chaleur et un circuit ( 16 ) de décharge, l'échangeur de chaleur ( 5 ) étant un accumulateur ( 15 ) de chaleur, de sorte que le gaz ( 13 ) de travail sortant du circuit ( 12 ) passe dans l'accumulateur ( 15 ) de chaleur et qu'ainsi la chaleur puisse être transmise du gaz ( 13 ) de travail directement à l'accumulateur ( 15 ) de chaleur.

6. Circuit ( 1 ) de charge suivant l'une des revendications 4 ou 5,
**caractérisé en ce que**
le circuit ( 16 ) de décharge comprend un générateur ( 30 ) de vapeur, une turbine ( 31 ) à vapeur, une génératrice ( 32 ) et un condenseur ( 33 ), la turbine ( 31 ) à vapeur étant reliée à la génératrice ( 32 ) par un arbre ( 34 ) et le générateur ( 30 ) de vapeur, la turbine ( 31 ) à vapeur et le condenseur ( 33 ) étant montés dans un circuit ( 35 ) eau-vapeur, le côté primaire du générateur ( 30 ) de vapeur communiquant avec le côté secondaire de l'accumulateur ( 15 ) de chaleur par un conduit ( 25 ) pour de la vapeur.

7. Circuit ( 1 ) de charge suivant l'une des revendications 4 ou 5,
**caractérisé en ce que**
le circuit ( 16 ) de décharge comprend un générateur ( 30 ) de vapeur, une turbine ( 31 ) à vapeur, une génératrice ( 32 ) et un condenseur ( 33 ), la turbine ( 31 ) à vapeur étant reliée à la génératrice ( 32 ) par un arbre ( 34 ) et le générateur ( 30 ) de vapeur, la turbine ( 31 ) à vapeur et le condenseur ( 33 ) étant montés dans un circuit ( 35 ) eau-vapeur, le générateur ( 30 ) de vapeur étant l'accumulateur ( 15 ) de chaleur de manière à pouvoir produire directement une vapeur par apport d'eau à l'accumulateur ( 15 ) de chaleur.

8. Circuit ( 1 ) de charge suivant l'une des revendications 1 à 7,
**caractérisé en ce qu'**
un chauffage ( 21 ) électrique supplémentaire est monté dans le conduit ( 9 ) pour du gaz chaud en amont de l'accumulateur ( 15 ) de chaleur.

9. Circuit ( 1 ) de charge suivant l'une des revendications 1 à 8,
**caractérisé en ce que**
l'étage ( 2 ) de compression est relié à l'étage ( 6 ) de détente par un arbre ( 22 ).

10. Circuit ( 1 ) de charge suivant l'une des revendications 1 à 9,
**caractérisé en ce que**
l'étage ( 2 ) de compression est constitué de plusieurs étages de compresseur et respectivement un échangeur de chaleur ( 5 ) est monté en aval de chaque étage de compresseur de sorte qu'un premier échangeur de chaleur ( 5a ) est monté en aval d'au moins un premier étage ( 2a ) de compresseur et qu'un deuxième échangeur de chaleur ( 5b ) est monté en aval d'un deuxième étage ( 2b ) de compresseur.

11. Circuit ( 1 ) de charge suivant l'une des revendications 1 à 10,
**caractérisé en ce que**
l'étage ( 6 ) de détente est constitué de plusieurs étages de détente et un échangeur de chaleur ( 20a, 20b ) pour de l'air ambiant est monté en aval de chaque étage de détente de manière à ce qu'au moins un premier échangeur de chaleur ( 20a ) pour l'air ambiant soit monté en aval d'au moins un premier étage ( 6a ) de détente et qu'un deuxième échangeur de chaleur ( 20b ) pour l'air ambiant soit monté en aval d'un deuxième étage ( 6b ) de détente.

12. Circuit ( 1 ) de charge suivant l'une des revendications 2 à 11,
caractérisé en par
l'utilisation dans une centrale électrique qui fonctionne avec des énergies renouvelables pour accumuler de l'énergie électrique en excès saisonnière.

13. Circuit ( 1 ) de charge suivant l'une des revendications 2 à 12,
**caractérisé en ce que**
l'accumulateur ( 15 ) de chaleur contient un milieu d'accumulation poreux, qui comprend du sable, du gravier, de la roche, du béton, de l'eau ou une solution de sel.

14. Procédé de production d'énergie thermique dans lequel, dans une opération de charge
a ) on comprime dans une opération de compression un gaz ( 13 ) de travail d'une température T1 et d'une pression P1 à une pression P2 à une température T2,
b ) dans une opération d'échange de chaleur, on transmet de la chaleur du gaz ( 13 ) de travail à un accumulateur ( 15 ) de chaleur, la température et la pression du gaz ( 13 ) de travail étant ainsi abaissées à une température T3 et à une pression P3 et
c ) dans une opération de détente, on détend le gaz ( 13 ) de travail jusqu'à une pression P4 à une température T4 et on retourne le gaz ( 13 ) de travail détendu à l'opération de compression dans un conduit de retour,
dans lequel on retire de la chaleur du gaz de travail entre l'opération d'échange de chaleur et l'opération de détente et on la transmet dans le conduit de retour au gaz ( 13 ) de travail.

15. Procédé suivant la revendication 14, dans lequel on règle la température T3 et la pression P3 en dimensionnant l'opération d'échange de chaleur.

16. Procédé suivant la revendication 14 ou 15, dans lequel on effectue l'opération de compression par de l'énergie électrique saisonnière en excès d'une centrale électrique à énergies renouvelables.

17. Procédé suivant l'une des revendications 14 à 16, dans lequel on utilise comme matériau d'accumulation pour l'accumulateur de chaleur de l'opération d'échange de chaleur des matériaux poreux, du sable, du gravier, de la roche, du béton, de l'eau ou une solution de sel.
